Europäisches Patentamt

European Patent Office

Office européen des brevets

(19)

(11) Numéro de publication: **0 264 915**
**B1**

(12) **FASCICULE DE BREVET EUROPEEN**

(45) Date de publication du fascicule du brevet:
27.06.90

(21) Numéro de dépôt: 87115351.6

(22) Date de dépôt: 20.10.87

(51) Int. Cl.⁵: **E04H 17/08**, E04H 17/22,
E01F 9/01

(54) Piquet d'ancrage pour bornes et autres applications.

(30) Priorité: 20.10.86 FR 8614562

(43) Date de publication de la demande:
27.04.88 Bulletin 88/17

(45) Mention de la délivrance du brevet:
27.06.90 Bulletin 90/26

(84) Etats contractants désignés:
AT BE CH DE ES GB LI

(56) Documents cités:
DE-C- 20 271
FR-A- 2 070 486
GB-A- 258 558
US-A- 1 351 912
US-A- 1 370 334
US-A- 1 709 732

(73) Titulaire: **BORNES ET BALISES SA, Zone Industrielle B.P. 14, F-17290 Aigrefeuille d'Aunis(FR)**

(72) Inventeur: **Becquet, Serge, Ardillière, F-17290 Aigrefeuille d'Aunis(FR)**
Inventeur: **Ballu, Francois-Xavier, 109 Rue Marius Lacroix, F-17000 La Rochelle(FR)**

(74) Mandataire: **Casalonga, Axel, BUREAU D.A. CASALONGA - JOSSE Morassistrasse 8, D-8000 München 5(DE)**

ACTORUM AG

## Description

L'invention concerne les piquets d'ancrage destinés à être plantés dans le sol, à la manière d'un clou, et servant le plus souvent à fixer sur le sol une borne perforée, en béton ou en matière plastique, mais pouvant servir également à fixer tout autre dispositif, y compris des haubans pour des pylônes.

Parmi ces piquets, les plus résistants à l'arrachement sont ceux qui comportent des tiges auxiliaires intérieures qui sont refoulées axialement à l'aide d'un mandrin, après enfoncement du piquet, de manière à se courber vers l'extérieur au voisinage de l'extrémité du piquet pour constituer un véritable ancrage, en pénétrant latéralement dans le sol selon des trajectoires courbes ou hélicoïdales.

Ce principe fort ancien est connu notamment d'après les documents US-A-1 370 334 et DE-C-910 126.

Du point de vue de la réalisation pratique, ces piquets sont le plus souvent constitués par un corps cylindrique en tube métallique muni d'une tête et d'une pointe massive rapportée, et ils diffèrent essentiellement par la forme de la partie, au voisinage de leur extrémité inférieure, qui produit la déviation vers l'extérieur des extrémités des tiges auxiliaires afin de provoquer leur courbure. Dans certains cas, cette partie est constituée par des orifices, en nombre égal au nombre de tiges auxiliaires, pratiqués dans la paroi latérale du tube, et coopérant parfois avec une forme conique donnée à l'extrémité supérieure de la pointe tournée vers l'intérieur du tube, comme décrit dans le document FR-A-2 106 704. Dans d'autres cas, cette partie déviatrice est constituée par des fraisages courbes, exécutés à la fraise-disque, dans la pointe massive elle-même, comme décrit dans le document DE-C-910 126, déjà mentionné, ou dans le document FR-A-2 122 659. Dans ce dernier document, il est même prévu de pratiquer ces fraisages selon une direction oblique par rapport à l'axe du piquet, afin de communiquer une déformation hélicoïdale à la partie des tiges auxiliaires refoulée vers l'extérieur.

Tous ces dispositifs sont efficaces, mais relativement onéreux à fabriquer. De plus les extrémités des tiges auxiliaires sont très près ou au contact de la paroi du trou produit par la pointe, de sorte que, dans certains sols particulièrement durs et compacts tels que le calcaire ou l'argile, les tiges auxiliaires peuvent, durant la phase d'enfoncement du piquet et en particulier dans le cas d'orifices latéraux dans le tube être refoulées vers l'intérieur et échapper des orifices, empêchant la réalisation de l'ancrage ultérieur.

Le but de l'invention est de réaliser un piquet d'ancrage tout aussi efficace et résistant à l'arrachement que les piquets connus, mais qui soit beaucoup plus économique de fabrication et d'un fonctionnement plus sûr dans les cas extrêmes.

L'invention utilise, d'une manière connue, un corps métallique tubulaire muni d'un collet supérieur, mais simplifié à l'extrême en étant dépourvu de toutes perforations, et deux tiges auxiliaires du modèle le plus simple comportant à leur extrémité inférieure une amorce de courbure de type connu. La principale innovation réside dans l'exécution de la pointe, qui est la pièce la plus onéreuse, celle-ci étant constituée par une pièce plate découpée, munie d'une partie intérieure venant s'emmancher et se fixer à l'extrémité intérieure du tube avec sa section transversale rectangulaire disposée selon un diamètre de ce tube, et une partie extérieure dépassant à l'extrémité inférieure du tube et dont la dimension tranversale est au moins égale, et de préférence supérieure au diamètre du tube, cette pièce comportant un orifice unique découpé perpendiculairement à sa surface plane et situé principalement dans la partie intérieure, les deux tiges auxiliaires arrivant à l'extrémité inférieure par les deux espaces naturels délimités entre ladite section transversale rectangulaire et le diamètre intérieur du tube, chacune par une face de la partie intérieure, et traversant ledit orifice à l'aide de leur extrémité inférieure présentant l'amorce de courbure pour ressortir chacune par la face opposée après s'être croisées à l'intérieur de l'orifice.

A titre de perfectionnement, la partie extérieure de la pièce d'extrémité est torsadée pour assurer une protection des extrémités des tiges auxiliaires.

D'autres particularités de l'invention apparaîtront dans la description qui va suivre d'un mode de réalisation pris comme exemple et représenté sur le dessin annexé, sur lequel :

la figure 1 est une coupe axiale partielle du piquet ;

la figure 2 est une coupe axiale partielle vue dans le sens perpendiculaire à celui de la figure 1 ; et

la figure 3 est une section transversale selon III-III de la figure 2.

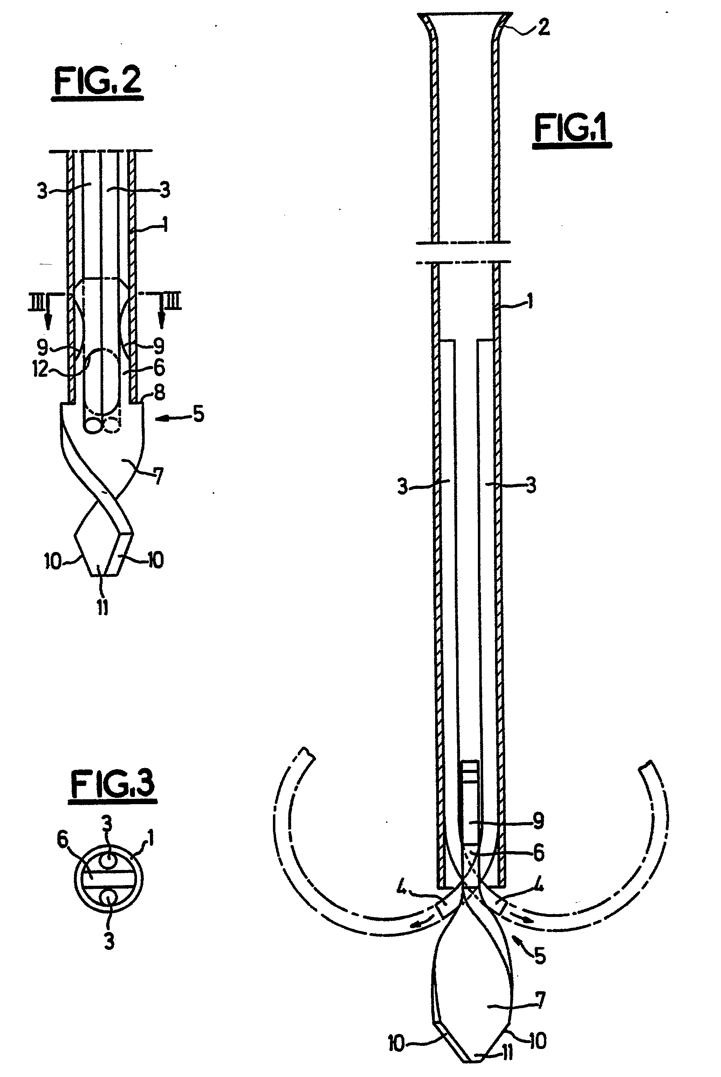

On voit sur la figure 1 le corps tubulaire 1, qui est un simple tronçon de tube sur lequel on a réalisé un collet supérieur 2 pour servir d'arrêt à la borne ou au dispositif que l'on veut fixer. On voit également les deux tiges auxiliaires 3 dont les extrémités inférieures 4 sont incurvées pour constituer une amorce de courbure.

Enfin, on voit la pièce d'extrémité 5 qui constitue la partie la plus caractéristique de l'invention. Cette pièce d'extrémité 5 est simplement découpée à plat dans de la tôle épaisse, de manière à présenter une partie intérieure 6 et une partie extérieure 7 séparées par un épaulement 8.

La partie intérieure 6 possède une largeur qui lui permet d'être introduite librement ou à force dans l'alésage intérieur du tube 1, sa section rectangulaire étant disposée selon un diamètre de cet alésage, comme illustré sur la figure 3. Cette introduction a lieu jusqu'à la butée de l'épaulement 8 sur l'extrémité inférieure du tube 1, après quoi cette partie intérieure 6 est fixée à l'extrémité inférieure du tube par tout moyen approprié. En particulier, on peut, d'une manière très économique, prévoir des points de soudure par résistance exécutés latéralement entre la paroi tubulaire et les deux chants de la partie 6, ceux-ci présentant de préférence à cet endroit des parties incurvées 9, comme représentées sur la figure 2, pour compléter les deux points de soudure par un effet de déformation du tube vers l'intérieur.

Ces soudures et déformations n'ont pas été représentées sur les figures pour plus de clarté.

La partie extérieure 7, de son côté, possède une largeur au moins égale, et de préférence supérieure au diamètre extérieur du tube 1, et elle se termine de préférence par deux pans coupés 10 pour delimiter approximativement une pointe de pénétration 11.

Un orifice allongé 12 est poinçonné à travers la pièce plate 5, en majorité dans sa partie intérieure 6, avec une hauteur suffisante pour permettre le passage des amorces de courbure 4 des tiges auxiliaires 3, et une largeur suffisante pour permettre l'introduction de ces deux amorces de courbure placées côte à côte, mais introduites chacune depuis une des faces de la partie 6. En effet, selon une particularité de l'invention, les deux tiges auxiliaires 3 passent chacune par un des espaces naturels subsistants entre la section rectangulaire de la partie interne 6 et l'alésage intérieur du tube 1, en longeant par conséquent chacune une des faces de cette partie intérieure 6, puis se croisent à l'intérieur de l'orifice 12 pour ressortir chacune par la face opposée à celle par laquelle elle est entrée.

A titre de perfectionnement, et pour protéger les extrémités 4 dépassantes des amorces de courbure contre la pression du sol et les impacts de cailloux présents dans le sol, afin d'éviter notamment que les tiges auxiliaires 3 puissent échapper de l'ouverture 12, la partie extérieure 7 de la pièce d'extrémité 5 est de préférence torsadée comme représenté sur les figures. Ceci a pour effet de pratiquer un trou plus grand que le tube et de maintenir les extrémités des tiges à distance des parois de ce trou pendant la phase d'enfoncement du piquet, évitant ainsi l'échappement indiqué. En outre cette forme hélicoïdale facilite la pénétration du piquet dans le sol.

La fabrication du piquet d'ancrage selon l'invention est donc extrêmement économique, puisqu'en particulier la fabrication de sa pièce d'extrémité 5 peut être obtenue à partir d'une tôle plane par une simple opération de la découpé à la presse, suivie éventuellement d'une opération de torsion d'extrémité, s'il y a lieu. Le corps tubulaire 1 de son côté est extrêmement économique à fabriquer et sa fixation sur la pièce d'extrémité 5 est obtenue par simple emmanchement et points de soudure électriques par résistance, comme indiqué plus haut. Naturellement, l'introduction des tiges auxiliaires 3 par leurs amorces de courbure 4 dans l'orifice 12 est effectuée juste avant cette introduction de la pièce 5.

L'utilisation du piquet selon l'invention se fait exactement selon l'état de la technique, c'est-à-dire en deux étapes. Dans un premier temps, on enfonce le piquet, éventuellement au travers de la borne, en introduisant dans le piquet un mandrin d'enfoncement présentant un épaulement qui vient s'appuyer sur le collet 2, mais dont la longueur de la partie cylindrique qui pénètre dans le tube 1 est insuffisante pour venir s'appuyer sur l'extrémité supérieure des tiges auxiliaires 3. En frappant sur ce mandrin, à l'aide d'un outillage approprié, on obtient l'enfoncement du piquet, même dans les sols les plus durs. Dans un deuxième temps, on retire ce mandrin d'enfoncement et on introduit un mandrin d'ancrage dont la partie cylindrique est au contraire beaucoup plus longue que la précédente pour qu'en frappant sur ce mandrin, cela produise le refoulement axial des tiges auxiliaires 3 dont les extrémités inférieures 4 sont alors chassées vers l'extérieur en se courbant progressivement, comme représenté en traits mixtes sur la figure 1, selon une forme circulaire légèrement hélicoïdale, sans qu'aucune disposition particulière soit nécessaire pour obtenir ce résultat. Dans cet état, le piquet est alors fortement ancré dans le sol et pratiquement inarrachable.

## Revendications

1. Piquet d'ancrage du type comportant un corps tubulaire métallique (1) muni d'un collet supérieur (2) et d'une pièce d'extrémité inférieure (5), et des tiges auxiliaires intérieures (3) sensiblement rectilignes à l'exception de leur extrémité inférieure présentant une amorce de courbure (4), avec des moyens de déviation de ces tiges vers l'extérieur pour permettre leur courbure progressive par refoulement axial, caractérisé par le fait
- que ladite pièce d'extrémité (5) est dérivée d'une forme plate, avec une partie intérieure (6) dont la section rectangulaire est disposée à l'intérieur du tube selon un diamètre de celui-ci, et une partie extérieure (7) de largeur au moins égale au diamètre extérieur du tube,
- que ledit moyen de déviation est constitué par un orifice unique (12) découpé dans cette pièce plate (5), en majorité dans la partie intérieure (6), et
- que les tiges auxiliaires (3) sont au nombre de deux et disposées de manière que leurs extrémités inférieures longent chacune une des faces de la partie intérieure (6), pour se croiser à l'intérieur dudit orifice (12) et ressortir chacune par la face opposée à celle par laquelle elle est entrée.

2. Piquet selon la revendication 1, caractérisé par le fait que la partie extérieure (7) de la pièce d'extrémité (5) est torsadée.

3. Piquet selon une des révendications précédentes, caractérisé par le fait que le corps tubulaire (1) est fixé sur les deux chants verticaux de la partie intérieure (6) de la pièce d'extrémité (5) au moyen de points de soudure par résistance.

4. Piquet selon la revendication 3, caractérisé par le fait que la partie intérieure (6) comprend, sur chacun de ses deux bords, une échancrure incurvée (9) située au-dessus de l'ouverture (12), échancrure dans laquelle on vient déformer la paroi du tube (1) et exécuter les points de soudure.

## Patentansprüche

1. Verankerungspfahl, umfassend einen rohrförmigen Metallkörper (1), der einen oberen Kragen (2) und ein unteres Endstück (5) aufweist, und zusätzliche innenliegende Stangen (3), die mit Ausnahme ihres einen Krümmungsansatz (4) zeigenden unteren Endes im wesentlichen geradlinig sind, mit einer Einrichtung zum Umlenken dieser Stangen nach außen, um sie durch axiale Stauchung zunehmend krümmen zu können, dadurch gekennzeichnet,
– daß das genannte Endstück (5) gebildet ist aus einem flachen Formteil, das einen innenliegenden Abschnitt (6) aufweist, dessen rechteckiger Querschnitt im Inneren des Rohrs auf einem Rohrdurchmesser angeordnet ist, und einen außenliegenden Abschnitt (7), dessen Breite mindestens gleich dem Außendurchmesser des Rohrs ist,

— daß die genannte Umlenkeinrichtung durch eine in dieses flache Teil (5), größtenteils in dessen innenliegenden Abschnitt (6), geschnittene einzelne Öffnung (12) gebildet wird, und

— daß es sich um zwei zusätzliche Stangen (3) handelt, die so angeordnet sind, daß ihre unteren Enden an jeweils einer Seite des innenliegenden Abschnitts (6) entlanglaufen, sich innerhalb der genannten Öffnung (12) kreuzen und jeweils aus der Seite austreten, die derjenigen, durch die sie eingetreten sind, abgewandt ist.

2. Verankerungspfahl nach Anspruch 1, dadurch gekennzeichnet, daß der äußere Abschnitt (7) des Endstücks (5) verdrillt ist.

3. Verankerungspfahl nach einem der vorhergehenden Ansprüche, dadurch gekennzeichnet, daß der rohrförmige Körper (1) an den beiden Vertikalkanten des innenliegenden Abschnitts (6) des Endstücks (5) durch Widerstandsschweißpunkte festgelegt ist.

4. Verankerungspfahl nach Anspruch 3, dadurch gekennzeichnet, daß der innenliegende Abschnitt (6) an jedem seiner beiden Ränder einen bogenförmige Ausschnitt (9) oberhalb der Öffnung (12) aufweist, an welchem Ausschnitt die Wand des Rohrs (1) verformt wird und die Schweißpunkte gesetzt werden.

**Claims**

1. Anchoring post of the type comprising a metal tubular body (1) which is provided with an upper collar (2) and a lower end piece (5), and comprising auxiliary inner rods (3) in an approximately straight line except for their lower end, which has the beginning of a curve (4), having means for these rods to deviate outwards to allow them to curve progressively by being forced out axially, characterised in that:

— the said end piece (5) is derived from a flat shape, having an inner part (6), the rectangular section of which is arranged inside the tube according to a diameter of the said tube, and an outer part (7) which is at least as wide as the outer diameter of the tube,

— the said means of deviation consists of a single opening (12) cut out of this flat piece (5), mostly in the inner part (6), and

— the auxiliary rods (3) are two in number and are arranged so that their lower ends each extend along one of the faces of the inner part (6), crossing over inside the said opening (12) and each re-emerging by way of the face opposite the one through which it entered.

2. Post according to claim 1, characterised in that the outer part (7) of the end piece (5) is twisted.

3. Post according to one of the preceding claims, characterised in that the tubular body (1) is attached to the two vertical, narrow sides of the inner part (6) of the end piece (5) by means of resistance spot welding.

4. Post according to claim 3, characterised in that the inner part (6) comprises, on each of its two edges, a cut-out part (9) which curves inwards and is located above the opening (12), in which cut-out part the wall of the tube (1) is deformed and the spot welding is carried out.

FIG.2

FIG.1

FIG.3